# EUROPÄISCHE PATENTSCHRIFT

(11) **EP 0 531 905 B1**
(45) Veröffentlichungstag und Bekanntmachung des Hinweises auf die Patenterteilung: **24.05.1995**
(21) Anmeldenummer: 92115207.0
(22) Anmeldetag: 05.09.1992
(51) Int. Cl.: B65H 67/06

(54) **Vorrichtung zum Verladen von Spulhülsen**
Apparatus for transfering bobbin tubes
Dispositif pour transferer des tubes de bobine

(30) Priorität: 12.09.1991 DE 4130300; 10.02.1992 DE 4203787
(43) Veröffentlichungstag der Anmeldung: 17.03.1993
(73) Patentinhaber: BARMAG AG, D-42862 Remscheid (DE)
(72) Erfinder: Adenheuer, Frank, W-5600 Wuppertal 22 (DE); Deters, Ludger August, Dr., W-5630 Remscheid 11 (DE); Langen, Manfred, W-4050 Mönchengladbach 1 (DE); Teich, Udo, W-4322 Sprockhövel (DE)
(74) Vertreter: Pfingsten, Dieter, Dipl.-Ing.

(56) Entgegenhaltungen:
- DE-B- 1 115 627
- GB-A- 2 129 451
- US-A- 3 082 908
- US-A- 4 139 108
- US-A- 4 702 427

## Beschreibung

Die Erfindung betrifft eine Vorrichtung zum Verladen von Spulhülsen nach dem Oberbegriff des Anspruchs 1.

Im Rahmen der vorliegenden Anmeldung werden die Begriffe "Leerhülse" und "Spulhülse" synonym verwendet.

Derartige Vorrichtungen werden benötigt, um bei Spinnanlagen einen immerwährenden Spulbetrieb zu gewährleisten. Hierzu müssen die Spulmaschinen dieser Spinnanlagen fortlaufend am Ende jeweils einer Spulreise mit neuen Leerhülsen bestückt werden, da die aufzuwickelnden Fäden kontinuierlich ihrer jeweiligen Spulstelle zulaufen.

Im allgemeinen ist jeweils eine Spulspindel einer Spulmaschine mit einer oder mit mehreren Spulhülsen bestückt und jeder dieser Spulhülsen wird ein Faden zugeführt.

Der Wechsel der Vollspulen jeweils einer Spulspindel gegen eine entsprechende Anzahl von Leerhülsen wird vollautomatisch vollzogen, um in kürzester Zeit die kontinuierlich zulaufenden Fäden ohne unnötigen Fadenabfall auf die neuen Leerhülsen aufwickeln zu können.

Aus der DE-A 29 39 675 ist eine Spulenwechseleinrichtung für eine derartige Spinnanlage bekannt, bei welcher ein Fadenbedienungswagen in dem Bedienungsgang von Spulmaschine zu Spulmaschine fahrbar ist. Der Fadenbedienungswagen ist operativ mit einem Spulenabnahmewagen verknüpft. Hierbei werden an der jeweils angefahrenen und bedienten Spulmaschine die Vollspulen von der Spulspindel übernommen und an den Spulenabnahmewagen übergeben, der diese dann an eine Spulentransportvorrichtung übergibt. Die Spulentransportvorrichtung nimmt eine Vielzahl von Spulen auf, welche sie anschließend zu der Einzelkontrolle transportiert, wonach die für gut befundenen Vollspulen zur Verpackungsstation laufen.

Der Wechsel der Vollspulen gegen Leerhülsen wird im vollautomatischen Spulbetrieb von einem Doffer vollzogen.

In der vorliegenden Anmeldung wird unter einem Doffer eine längs der Maschinenfront von Spulmaschine zu Spulmaschine fahrbare Vorrichtung verstanden, welche am Ende einer Spulreise die Abnahme der produzierten Vollspulen vornimmt. Diese Abnahme beinhaltet die Entfernung der Vollspulen von der jeweils bedienten Spulspindel und die Übergabe dieser Vollspulen zum Abtransport an einen Förderwagen.

Der Zeitpunkt der Abnahme der produzierten Vollspulen wird von dem Doffer überwacht, wobei zweckmäßigerweise der Doffer auch die jeweils erforderliche Anzahl von Leerhülsen anfordert.

In einer besonderen Ausführungsform ist der Doffer zusätzlich dafür ausgelegt, die soeben bediente Spulspindel nach der Abnahme und der Übergabe der Vollspulen mit frischen Leerhülsen zu bestücken, damit die Spulmaschine den Spulbetrieb weiterführen kann. Ein solcher Doffer ist z.B. aus der DE-B 24 49 415 in allen Einzelheiten bekannt. Bei dieser Ausführung werden durch eine an dem Doffer vorbeilaufende Förderkette ständig die erforderliche Anzahl der benötigten Leerhülsen vorbeigeführt.

Weiterhin ist aus der DE-A 21 28 974 ein Spulenwechselwagen bekannt, der einen Austausch von Vollspulen gegen Leerhülsen vollzieht. Bei dieser Ausführung werden die Leerhülsen auf dem Spulenwechselwagen mitgeführt und mittels zweier Greifarme auf die Spulspindel der Spulmaschine übergeben.

Weiterhin ist aus der DE-A 21 23 689 eine fahrbare Spulenwechseleinrichtung bekannt, bei welcher die Vollspulen auf eine fahrbare Spulentransporteinrichtung gegeben werden. Anschließend wird die Spulentransporteinrichtung zur Einzelkontrolle gefahren, wo die einzelnen Vollspulen entweder Stück für Stück oder stichprobenartig einer Qualitätsprüfung unterzogen werden, um anschließend eine Verpackungsstation zu durchlaufen.

Ähnliche Vorrichtungen zur Bestückung von Spulspindeln mit Spulhülsen aus einem Leerhülsenspeicher sind aus der US-A-3,082,908 sowie der US-A-4,139,108 bekannt.

Ausgehend von diesem Stand der Technik ist es Aufgabe der Erfindung, die Vorrichtung zum Verladen von Spulhülsen so zu verbessern, daß das Einbringen der Spulhülsen in den Prozess der Be- und Verarbeitung von kontinuierlich zulaufenden Fäden, insbesondere Chemiefäden, vollautomatisch erfolgen kann. Hieraus ergibt sich als weitere Aufgabe, die Vorrichtung so zu verbessern, daß sie bei einer Spinnanlage zur ununterbrochenen Herstellung einer Vielzahl von Chemiefäden verwendet werden kann.

Diese Aufgabe wird gelöst durch die Merkmale des Anspruchs 1.

Aus der Erfindung ergibt sich der Vorteil, daß jeweils eine größere Anzahl von Spulhülsen entsprechend der Anzahl der Zinken des Rechens gleichzeitig dem Leerhülsenspeicher entnommen werden kann, wobei anschließend eine Vereinzelung der Spulhülsen entsprechend dem Bedarf einer Spulspindel stattfindet.

Damit schafft die Erfindung das notwendige Bindeglied zwischen einer platzsparenden Leerhülsenaufbewahrung im Leerhülsenspeicher und dem jeweiligen Leerhülsenbedarf an vereinzelten Leerhülsen einer Spulspindel.

Hierbei macht sich die Erfindung die Erkenntnis zunutze, daß bei einer platzsparenden Speicherung von Leerhülsen im Leerhülsenspeicher diese lagenweise übereinander und dicht an dicht nebeneinander geschichtet sind, so daß der Rechen mit seinen Zinken in jeweils die oberste der Lagen hineinfahren kann und diese Lage aus dem Leerhülsenspeicher entnehmen kann. Hierduch wird zuverlässig erreicht, daß die schichtweise gestapelten Leerhülsen genau schichtweise in den Prozess der Fadenbe- und -verarbeitung eingeführt werden.

Danach erfolgt eine Vereinzelung der soeben entnommenen obersten Lage an Leerhülsen. Diese Vereinzelung erfolgt im Zusammenwirken der Auschiebeeinrichtung und der Nachschubeinrichtung. Dabei kommt es wesentlich auf die Tatsache an, daß die Rasterablage eine Rasterteilung aufweist, die im wesentlichen dem Hülsendurchmesser entspricht.

Diese Erkenntnis macht sich die Erfindung zunutze, um die auf der Rasterablage abgelegte Lage an Leerhülsen zu vereinzeln.

Hierdurch ist nämlich sichergestellt, daß alle Leerhülsen auf der Rasterablage stets in eindeutigen Positionen liegen, wobei jeweils eine Leerhülse einer einzigen Rasterposition zugeordnet ist.

Dabei werden die in der Ausschiebeposition befindlichen Spulhülsen in Längsrichtung auf den Transportdorn geschoben, der zuvor in fluchtende Position mit der Ausschiebeposition gebracht wurde. Hierzu kann der Förderwagen manuell oder automatisch bzw. vollautomatisch in der Ausschiebeposition positionerbar sein.

In einer bevorzugten Ausführungsform sind die einzeln beweglichen Förderwagen unabhängig voneinander fahrbar und bilden ein Transportsystem, welches stets zur Bedienung der Spulköpfe zur Verfügung steht. Hieraus ergibt sich ein flexibles Bedienen entsprechend dem jeweiligen Bedarf der einzelnen Spulspindeln der Spulmaschinen, welches geringste Wartezeiten für die Abnahme der Vollspulen am Ende einer Spulreise zur Folge hat. Folglich läßt sich ein hoher Ausnutzungsgrad für die Spulmaschinen in der Gesamtheit erzielen.

Die Merkmale des Anspruchs 2 betreffen eine Weiterbildung der Erfindung mit dem Vorteil eines einfachen Linearantriebs für die Ausschiebeinrichtung und einer problemlosen Übertragungsmechanik. Eine derartige Ausschiebeinrichtung kann beispielsweise durch eine pneumatische Kolben-Zylinder-Einheit mit einfachen Mitteln realisiert werden.

Die Merkmale des Anspruchs 3 betreffen eine Weiterbildung der Rasterablage, die den Vorteil bietet, daß die abgelegten Spulhülsen von allen Seiten frei zugänglich sind und insbesondere das Verschieben der Spulhülsen auf den Transportdorn behinderungsfrei ermöglicht ist. Es soll jedoch ausdrücklich gesagt sein, daß die Rasterablage nicht auf diese Ausführungsform beschränkt ist. Sie kann beispielsweise auch aus einem ortsfesten Rechen bestehen.

Die Weiterbildung nach den Merkmalen des Anspruchs 3 bietet darüberhinaus den Vorteil, daß die Rasterablage von einer der Stirnseiten beladen werden kann und zu der anderen der Stirnseiten entladen werden kann. Dieses Durchlaufverfahren verlangt eine sehr einfache kinematische Führung des Rechens und der Ausschiebeinrichtung.

Die Weiterbildung nach den Merkmalen des Anspruchs 4 bietet den Vorteil, daß zeitlich vor dem Bestücken des Tragdorns des Förderwagens zunächst die erforderliche Anzahl von Leerhülsen für eine Spulspindel zusammengestellt werden kann, um diese Leerhülsen dann gemeinsam auf den Tragdorn aufschieben zu können. Hierdurch wird erreicht, daß die erfindungsgemäße Vorrichtung ohne weiteres an die Erfordernisse zur Herstellung jeweils unterschiedlicher Spulenzahlen pro Spulspindel angepaßt werden kann.

Die Merkmale des Anspruchs 5 geben eine Lehre mit dem Vorteil, daß die Rasterablage und die Speicherablage in Längsrichtung der Spulhülsen die geringstmögliche Länge bei gleichzeitig sicherer Auflage der Spulhülsen aufweisen.

Die Merkmale des Anspruchs 6 ermöglichen auf einfache Weise das Durchschieben der in der Ausschiebeposition befindlichen Spulhülse zu der Speicherablage.

Die Merkmale des Anspruchs 7 stellen sicher, daß der mit Spulhülsen bestückte Rechen auch bei schnellem Verfahren und Abbremsen in horizontaler Richtung seine über die Zinken geschobenen Spulhülsen nicht verlieren kann.

Die Merkmale des Anspruchs 8 ermöglichen, daß stets eine genügende Anzahl von Leerhülsen in der Rasterablage liegt, so daß der Spulbetrieb auch dann fortgesetzt werden kann, wenn der Leerhülsenspeicher nachgefüllt werden muß.

Die Merkmale des Anspruchs 9 betreffen eine Weiterbildung der Erfindung mit dem Vorteil, daß die Spulhülsen in dem Leerhülsenspeicher in vollkommen identischen Lagen übereinander angeordnet sind, so daß der Rechen in stets der gleichen Position in die oberste Lage der Leerhülsen einfahren kann. Durch diese Merkmale wird erreicht, daß die übereinander liegenden Spulhülsen trotz der instabilen Gleichgewichtslage, in der sie sich befinden, zuverlässig in ihrer Position gehalten werden, da sich die jeweils außen befindlichen Spulhülsen an den Wandungen des Leerhülsenspeichers abstützen können.

Diese Erkenntnis führt zu der bevorzugten Ausführung nach Anspruch 10, welche den Vorteil bietet, daß der Verpackungskarton des Herstellers der Spulhülsen zugleich als Leerhülsenspeicher verwendet werden kann. Diese Doppelfunktion führt folglich zu einer problemlosen Einbindung der angelieferten Spulhülsen in den Fadenbe- und -verabeitungsprozeß.

Die Ansprüche 11, 12 und 13 betreffen Weiterbildungen der Erfindung mit dem Vorteil einer vervielfachten Spulenproduktion, so daß die Produktivität entsprechend steigt.

Entsprechend den Merkmalen des Anspruchs 14 kann die Rasterablage als solche beweglich sein und jeweils eines der Rasterelemente in die Ausschiebeposition verbringen. Hierzu dient ein Antrieb, der schrittweise mit der Rasterteilung in Richtung zur Ausschiebeposition beweglich ist.

In der bevorzugten Ausführungsform nach Anspruch 15 wird die Rasterablage durch eine umlaufende endlose Förderkette gebildet.

Diese Förderkette kann entweder schrittweise oder kontinuierlich angetrieben sein, wobei im letzteren Fall die Umlaufgeschwindigkeit auf den Zeittakt zum Spulenwechseln abgestimmt werden muß.

Eine bevorzugte Ausführungsform wird durch die Merkmale des Anspruchs 18 erreicht, welche den Vorteil bietet, daß nur eine geringe Anzahl von Teilen beweglich ist. Bei dieser Ausführungsform wird jeweils die gesamte Hülsenlage in den parallelen Rinnen der Rasterablage in Richtung zur Ausschiebeposition verschoben. Der Verschiebeweg beträgt jeweils eine Rasterteilung zusätzlich zu dem Verschiebeweg des vorangegangenen Verschiebetakts. Dies erfolgt so lange, bis die gesamte Hülsenlage auf die Transportdorne der Förderwagen geschoben worden ist. Anschließend wird von dem Rechen eine neue Hülsenlage aufgelegt.

Die Merkmale des Anspruchs 19 betreffen eine Weiterbildung der Erfindung, die ein abrutschsicheres Ergreifen der Spulhülsen in der Auschiebeposition ermöglicht und die insbesondere von unterschiedlichen Durchmessern von Spulhülsen verschiedener Hersteller und Lieferanten oder für verschiedene Produkte weitestgehend unabhängig ist.

Die Merkmale des Anspruchs 20 betreffen eine Weiterbildung der Erfindung bei welcher ein vollautomatischer Produktionsprozeß von einer Vielzahl von kontinuierlich zulaufenden Chemiefäden im 24-Stunden-Takt ermöglicht wird.

Im folgenden wird die Erfindung anhand von Ausführungsbeispielen näher erläutert.

Es zeigen:
- Fig. 1: eine Ansicht auf eine mögliche Ausführungsform der Erfindung;
- Fig. 2: eine Ansicht auf eine Ausführungsform der Erfindung mit Speicherablage;
- Fig. 3: eine Ausführungsform der Erfindung mit mehreren vertikal übereinanderliegenden Rasterablagen;
- Fig. 4: eine Ausführungsform der Erfindung mit mehreren horizontal nebeneinander angeordneten Ausschiebepositionen;
- Fig. 5: eine Ausführungsform der Erfindung mit symmetrischen Rasterablagen und mehreren Ausschiebepositionen;
- Fig. 6: eine Ausführungsform der Erfindung mit beweglichen Ablageelementen,
- Fig. 7: eine Ausführungsform der Erfindung mit ortsfesten Rinnen der Rasterablage;
- Fig. 8: eine Draufsicht auf eine Anordnung der Erfindung im Zusammenwirken mit einer Spinnanlage.

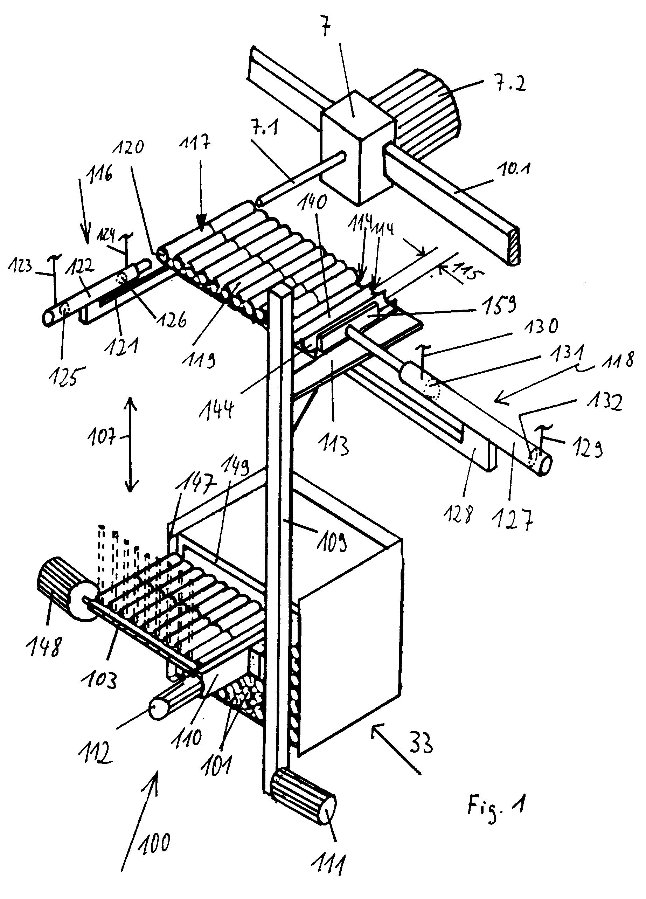

Sofern im folgenden nicht ausdrücklich etwas anderes gesagt ist, gilt die nun folgende Beschreibung stets für alle Figuren 1 bis 8.

Die Fig. 1 bis 7 zeigen eine Vorrichtung 100 zum Verladen von Spulhülsen 101 aus einem Leerhülsenspeicher 33 auf den Transportdorn 7.1 von Förderwagen 7.

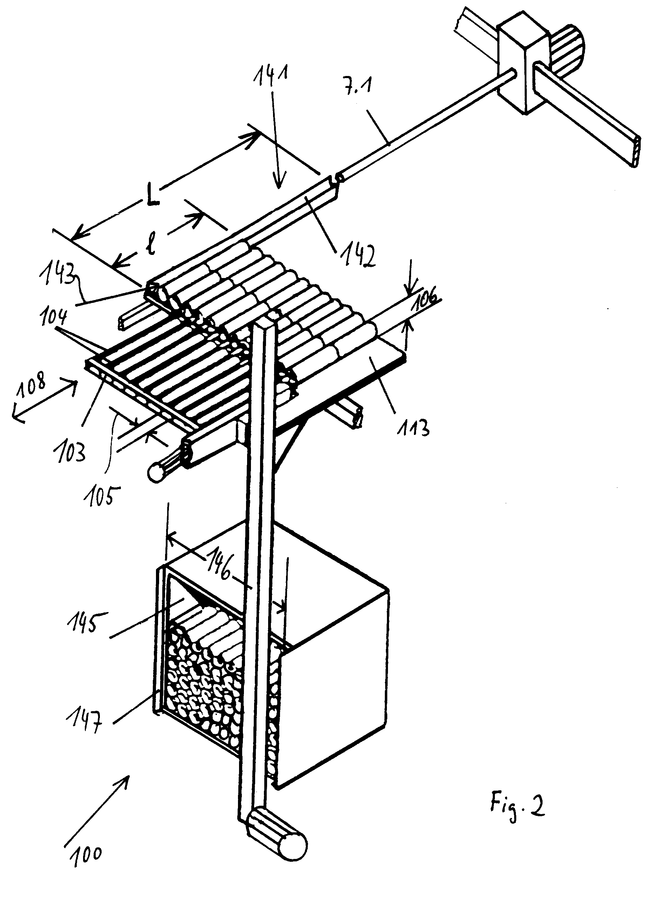

Diese Vorrichtung besteht, wie insbesondere die Fig. 1 und 2 zeigen, aus einem Rechen 103 mit auskragenden Zinken 104, deren Abstand 105 im wesentlichen gleich dem Hülsendurchmesser 106 ist und die horizontal in einer Ebene liegen.

Fig. 1 zeigt die Position des Rechens 103, kurz nachdem dieser die oberste Hülsenlage aus dem Leerhülsenspeicher 33 genommen hat, während Fig. 2 den Rechen in oberer Position zeigt, kurz nachdem dieser die vorher entnommene Hülsenlage auf der Rasterablage 113 abgelegt hat. Auf die Funktion wird noch eingegangen werden.

Aus dem eben Gesagten ergibt sich jedoch bereits, daß der Rechen 103 in vertikaler Richtung 107 sowie in Richtung 108 der Zinken 104 verfahrbar ist.

Hierzu ist der Rechen an einer Plattform 110 starr angebracht, welche Plattform 110 in vertikaler Richtung an dem ortsfesten Standpfeiler 109 liftartig gehoben und gesenkt werden kann. Dies wird z.B durch eine nicht gezeigte Gewindespindel erreicht, die innerhalb des Standpfeilers 109 drehbar gelagert ist und von dem Vertikalantriebsmotor 111 in beiden Richtungen angetrieben wird. Ein anderer Vertikalantrieb kann beispielsweise durch Hydraulikzylinder realisiert werden.

Die Plattform 110 weist eine nicht näher gezeigte horizontale Schienenführung für den Rechen 103 auf. Der Rechen ist entlang dieser Schienenführung mittels des Horizontalantriebsmotors 112 in Richtung 108 seiner Zinken 104 vor- und zurückfahrbar.

An diesem ortsfesten Standpfeiler 109 ist weiterhin die Rasterablage 113 starr angebracht, so daß diese stets in der gezeigten Position verbleibt.

Die Rasterablage 113 ist bei der Zustellbewegung des Rechens 103 in Richtung 108 auf die Rasterablage zu mit den Leerhülsen 101 beladbar. Hierzu bildet die Rasterablage 113 eine Vielzahl von Ablagepositionen 114, deren Anzahl jedoch mindestens so groß sein muß wie die Anzahl der Zinken 104 des Rechens 103, um für jede der Leerhülsen 101 eine eindeutig zugeordnete Ablageposition 114 auf der Rasterablage 113 zu erhalten.

Die Ablagepositionen liegen in einer horizontalen Ebene und die Teilung der Ablagepositionen (= Rasterteilung 115) entspricht dem Hülsendurchmesser 106.

Weiterhin gehört zu der Verladevorrichtung 100 eine Ausschiebeinrichtung 116, welche die Hülsen einer der Ablage positionen greift und die ergriffenen Hülsen in Längsrichtung auf den Transportdorn 7.1 verschiebt.

Die betreffende Rasterposition wird als Ausschiebeposition 117 bezeichnet und ist im vorliegenden Fall eine der endseitigen Rasterpositionen 143. Dies bedeutet jedoch keinerlei Einschränkung der Erfindung, da prinzipiell jede der Ablagepositionen 114 Ausschiebeposition 117 sein kann.

Weiterhin gehört zu der Verladevorrichtung 100 eine Nachschubeinrichtung 118, die der Rasterablage zugeordnet ist und durch die nach dem Verschieben der Spulhülse 101 von der Ausschiebeposition 117 auf den Transportdorn 7.1 die auf der Rasterablage 113 abgelegte Hülsenlage 119 um eine Rasterteilung 115 in Richtung auf die Ausschiebeposition 117 versetzbar ist.

Die Ausschiebeinrichtung 116 und die Nachschubeinrichtung 118 sind prinzipiell gleich aufgebaut, so daß die Beschreibung gemeinsam erfolgen kann.

Die Ausschiebeinrichtung 116 und die Nachschubeinrichtung 118 sind doppelt wirkende Kolben-Zylinder-Einheiten 122, 127, die bezüglich der Rasterablage ortsfest an Trägern 121, 128 sitzen. Der ausfahrende Kolben der Kolben-Zylinder-Einheiten 122, 127 ist jeweils der Rasterablage zugeordnet, wobei die Ausrichtung der Kolben-Zylinder-Einheiten 122, 127 senkrecht zueinander ist. Jede der Kolben-Zylinder-Einheiten 122, 127 ist an eine Vorschubleitung 123, 129 sowie an eine Rückzugleitung 124, 130 angeschlossen.

Durch entsprechendes Beaufschlagen der Vorschubleitungen 123, 129 wird die zugehörige Kolben-Zylinder-Einheit 122, 127 jeweils in die Vorschubposition 126, 131 verbracht.

Gleichermaßen wird beim Beaufschlagen der Rückzugleitungen 124, 130 die zugehörige Kolben-Zylinder-Einheit 122, 127 in die Rückzugposition 125, 132 verbracht.

In Fig. 2 sind die doppelt wirkenden Kolben-Zylinder-Einheiten 122, 127 der Einfachheit wegen nicht gezeigt, es soll jedoch ausdrücklich gesagt sein, daß sie selbstverständlich Gegenstand auch dieses Ausführungsbeispiels sind.

Es ist eine Besonderheit der gezeigten Ausführungsbeispiele, daß die Ausschiebeinrichtung 116 die Spulhülsen 101 der Ausschiebeposition 117 stirnseitig beaufschlagt und parallel zu deren Längsrichtung verschiebt. Aus diesem Grunde ist die Kolben-Zylinder-Einheit 122 koaxial vor der Ausschiebeposition 117 angeordnet und verfährt exakt in Längsrichtung in die Ausschiebeposition 117 hinein.

Es ist eine weitere Besonderheit der Ausführungsbeispiele nach den Fig. 1 und 2, daß die Rasterablage 113 aus zueinander parallelen Rinnen 140 besteht, die jeweils für sich eine Ablageposition 114 bilden. Diese Rinnen 140 sind dicht an dicht benachbart angeordnet und geben der abgelegten Hülsenlage 119 den notwendigen Seitenhalt, damit die Leerhülsen 101 nicht wegrollen können.

Fig. 2 zeigt eine weitere Besonderheit. In diesem Falle ist fluchtend vor der Ausschiebeposition 117 der Rasterablage 113 eine Speicherablage 141 angeordnet. Weiterhin ist die Ausschiebeinrichtung, die hier nicht gezeigt ist, aber der Darstellung der Fig. 1 entspricht, stufenweise entweder nur um die Länge l der Rasterablage 113 oder zusätzlich um die Länge (L-l) der Speicherablage 141 verschiebbar.

Demzufolge wäre die Kolben-Zylinder-Einheit 122 so zu bemessen, daß diese insgesamt um die Länge L verfahrbar ist. Diese Länge L darf jedoch stets nur bei jedem zweiten Ausschiebtakt verfahren werden, worauf noch eingegangen wird.

Im vorliegenden Fall entspricht die Länge l der Rasterablage 113 im wesentlichen der Länge der Spulhülsen, wobei hier die weitere Besonderheit gezeigt ist, daß die Länge l der Rasterablage dem Zweifachen der Länge einer Spulhülse entspricht. Es kommt also wesentlich darauf an, daß die Länge l der Rasterablage 113 der einfachen Länge einer Spulhülse 101 oder einem ganzzahligen Vielfachen hiervon entspricht.

Sobald diese Länge l vorgegeben ist, ist demnach die Länge (L-l) der Speicherablage 141 so zu bemessen, daß diese im wesentlichen ein ganzzahliges Vielfaches der Länge l der Rasterablage 113 ist. Im vorliegenden Fall ist die Länge L-l der Speicherablage 141 das 1-fache der Länge l der Rasterablage 113.

Eine weitere Besonderheit besteht darin, daß die Speicherablage 141 in Übereinstimmung mit der Ausbildung der Rasterablage 113 als Speicherrinne 142 ausgebildet ist, in welcher die in der Ausschiebeposition 117 befindlichen Spulhülsen 101 entlanggeschoben werden.

Fig. 1 zeigt gestrichelt eine weitere Besonderheit. Hier ist der Rechen 103 in seiner Längsachse drehbar an dem Verfahrgestell 110 gelagert und mittels des Schwenkantriebs 148 so drehbar, daß seine Zinken 104 in die gestrichelt gezeigte, vertikal aufwärts weisende Position schwenkbar sind.

Wie Fig. 1 bis 7 weiterhin zeigen, ist die Ausschiebeposition 117 eine der endseitigen Rasterpositionen 143 und die Nachschubeinrichtung (s. Fig. 1) 118 ist derart beweglich, daß sie von der anderen der beiden Endseiten 144 der Rasterablage 113 zur Ausschiebeposition 117 verfahrbar ist.

Der Leerhülsenspeicher besitzt, wie die Fig. 1 und 2 zeigen, einen quaderförmigen Speicherraum 145. Dieser Speicherraum ist in seiner dem Rechen 103 zugewandten Vertikalebene offen. In dieser Vertikalebene liegen die Stirnflächen der Spulhülsen 101, so daß die Spulhülsen 101 mit ihren Öffnungen gen den Zinken 104 des Rechens 103 entgegengewandt sind.

Die horizontale lichte Weite 146 entspricht einem Hülsendurchmesser 106, multipliziert mit der Anzahl der Spulhülsen 101 einer Hülsenlage 119.

Der Leerhülsenspeicher ist im vorliegenden Fall ein Karton 149, der einseitig offen in einer ortsfesten Kartonaufnahmevorrichtung 147 steht. Er wird von der Kartonaufnahmevorrichtung 147 allseitig gestützt und am Wegrutschen gehindert, wenn der Rechen mit seinen Zinken ein- und ausfährt. Durch die allseitige Stützwirkung wird erreicht, daß die Spulhülsen 101 im Karton 149 stets in ihrer Einfahrposition für den Rechen 103 verbleiben.

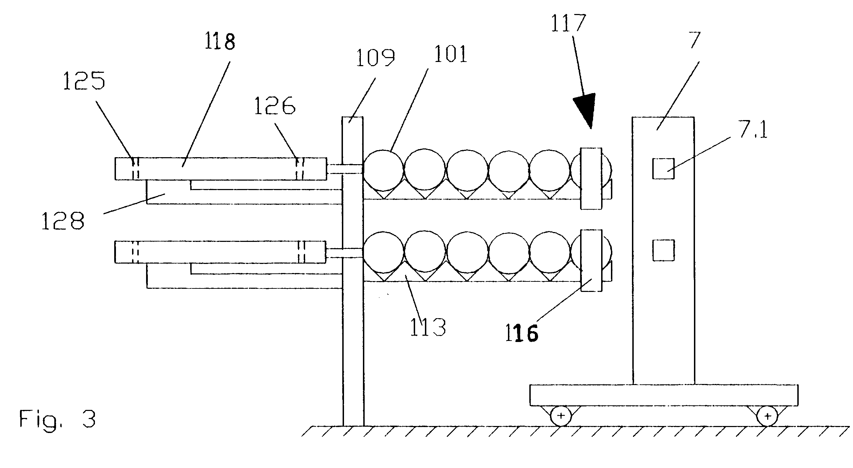

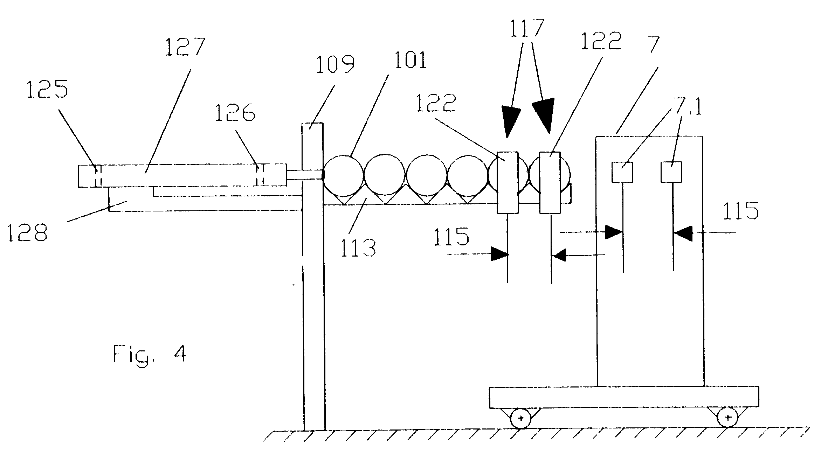

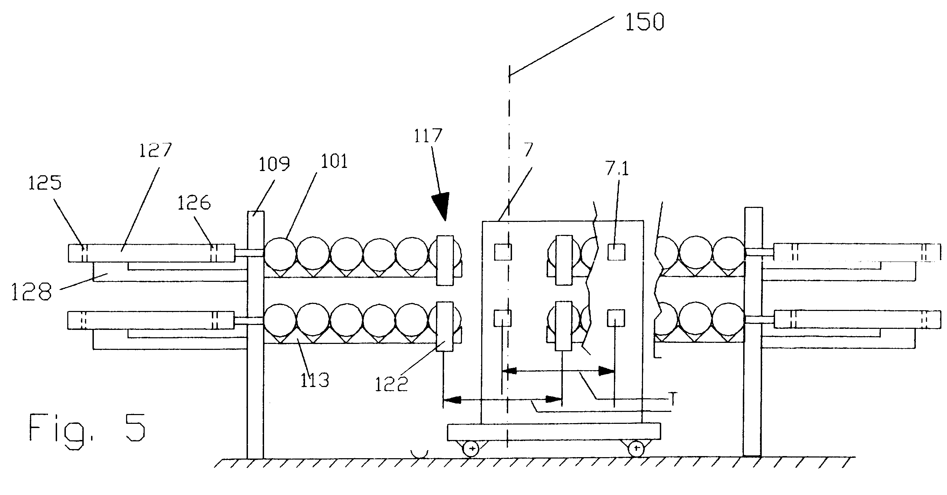

Fig. 3 zeigt darüberhinaus einen Bedienungswagen mit mehreren Transportdornen 7.1, hier zwei Stück, vertikal übereinander. Hierzu gehören zwei Rasterablagen 113, die jeweils in der Ebene der Transportdorne 7.1 liegen. Jeder Rasterablage 113 ist eine Ausschiebeinrichtung 116 sowie eine Nachschubeinrichtung 118 zugeordnet.

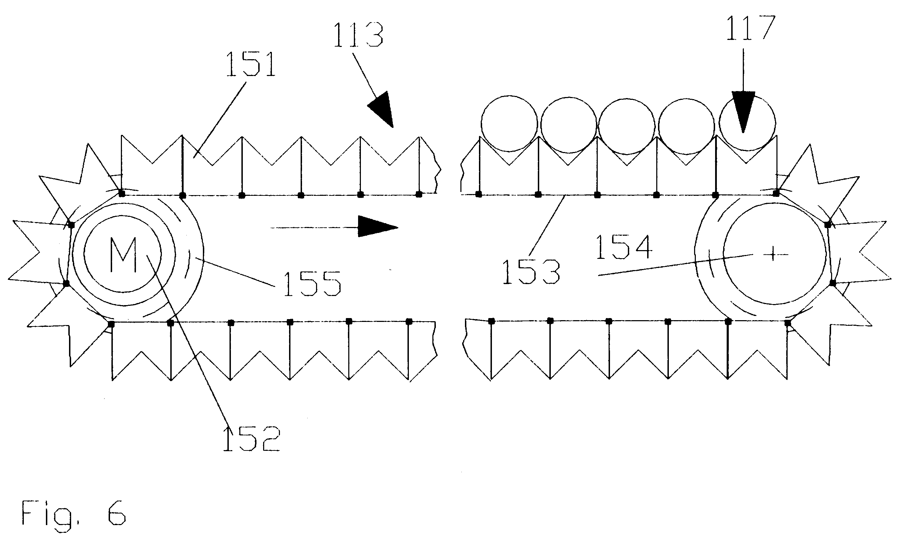

Fig. 4 zeigt einen Bedienungswagen mit zwei Transportdornen 7.1 in einer horizontalen Ebene nebeneinander. Zum gleichzeitigen Beladen dieser Transportdorne 7.1 verfügt die Rasterablage über zwei Ausschiebepositionen 117, zu der jeweils eine Ausschiebeinrichtung gehört, die hier als Kolben-Zylinder-Einheit 122 ausgebildet ist.

Es kommt hier darauf an, daß die Rasterteilung 115 auch dem horizontalen Abstand der Transportdorne 7.1 entspricht, so daß beide Transportdorne in einer einzigen Beladestellung des Förderwagens 7 beladen werden können, ohne daß dieser neu positioniert werden muß.

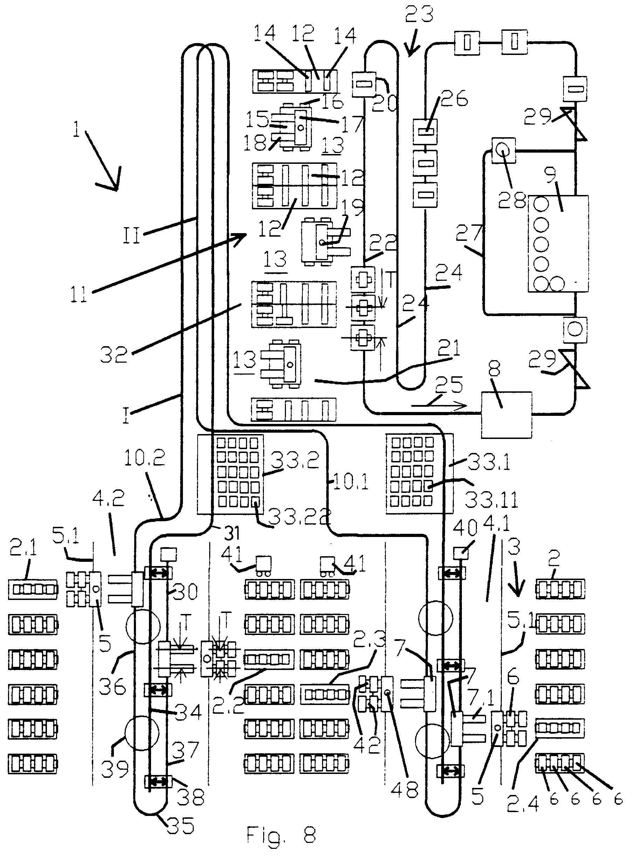

Die besondere Ausführungsform nach Fig. 5 zeigt Bedienungswagen mit zwei Transportdornen 7.1 vertikal übereinander und jeweils zwei Transportdornen 7.1 horizontal nebeneinander. Die Rasterablage 113 ist bezüglich der Mittelebene 150 zwischen den Transportdornen symmetrisch, wobei die Ausschiebepositionen 117 sich gegenüberliegen bezüglich dieser Mittelebene 150. Die Ausschiebepositionen 117 und die Transportdorne 7.1 besitzen jeweils die Abstände T der Förderteilung voneinander. Hierauf wird in Fig. 8 noch eingegangen werden.

Fig. 6 zeigt eine Rasterablage 113, die aus zusammenhängenden Ablageelementen 151 besteht. Die Ablageelemente 151 sind quer zur Hülsenlängsachse beweglich in Richtung zur Ausschiebeposition 117. Die Nachschubeinrichtung besteht aus einem Antrieb 152, der jeweils eines der Ablageelemente 151 in die Ausschiebeposition 117 bringt.

In diesem Fall sind die Ablageelemente 151 als eine endlose umlaufende Förderkette 153 ausgebildet, welche zwischen den Kettenrädern 154, 155 gespannt ist. Eines der Kettenräder wird von dem Antrieb 152 in Drehung versetzt, und zwar so, daß sich das obere Kettentrum in Richtung zur Ausschiebeposition 117 bewegt. Dabei kann der Antrieb kontinuierlich oder schrittweise erfolgen.

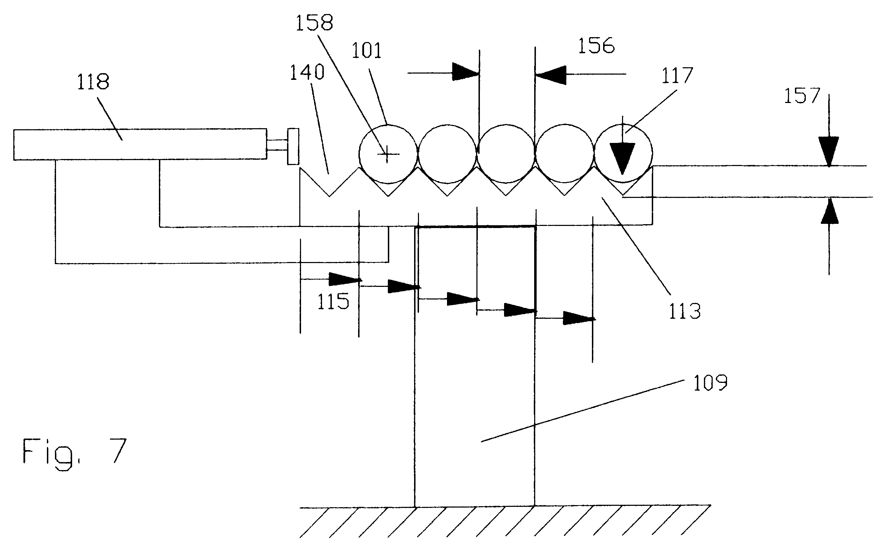

Fig. 7 zeigt eine Detailansicht der Rinnen 140 gemäß den Fig. 1 und 2. Die Rinnen 140 sitzen ortsfest auf der ebenfalls ortsfesten Rasterablage 113. Die Rinnentiefe 157 ist deutlich geringer als der Außenradius 156 einer darin liegenden Spulhülse 101, jedoch mindestens so tief, daß jede der Spulhülsen 101 im stabilen Gleichgewicht in ihrer Rinne 140 liegt.

Die Nachschubeinrichtung 118 ist senkrecht zur Hülsenlängsachse 158 schrittweise mit der Rasterteilung 115 in Richtung zur Ausschiebeposition 117 verfahrbar.

In allen Fällen greift die Ausschiebeinrichtung 116 jeweils an derjenigen Stirnseite der Spulhülsen 101 an, welche von dem Transportdorn 7.1 abgewandt ist.

Zur Funktion:
Die einzeln beweglichen Förderwagen 7 kommen mit leerem Tragdorn 7.1 an der Ausschiebeposition 117 vorbei und verharren in dieser Fahrstellung, wobei der Tragdorn 7.1 fluchtend vor der Ausschiebeposition liegt.

In der Ausschiebposition 117 befinden sich so viele Spulhülsen 101, wie der wartende Tragdorn 7.1 aufzunehmen imstande ist. Im Falle der Fig. 1 sind dies zwei Spulhülsen 101 und im Falle der Fig. 2 sind dies vier Spulhülsen 101.

Alsdann wird die in der Rückzugposition 125 befindliche Kolben-Zylinder-Einheit 122 der Ausschiebeineinrichtung 116 in Richtung auf den Tragdorn 7.1 gefahren. Dabei stößt der ausfahrende Kolben stirnseitig auf die Hülsenreihe der Ausschiebeposition 117 und schiebt diese dann vor sich her, während er weiter ausfährt. Er fährt so weit, bis er das Ende der Rasterablage 113 erreicht hat und damit die vor sich hergeschobene Hülsenreihe auf den Tragdorn 7.1 aufgesteckt hat.

Der nun mit Spulhülsen 101 beladene Förderwagen 7 entfernt sich, wie anhand der Fig. 8 noch näher erläutert wird.

Die noch vorgeschobene Ausschiebeinrichtung 122 fährt in die Rückzugposition 125 zurück und hinterläßt dabei eine leere Ausschiebeposition 117, die als nächstes gefüllt werden muß.

Hierzu wird die Kolben-Zylinder-Einheit 127 der Nachschubeinrichtung 118 aus der Rückzugposition 132 zunächst bis an die nächste Hülsenreihe herangefahren und dann um eine Rasterteilung 115 weiter vorangetrieben. Dabei schiebt das am freien Kolbenende befindliche Schild 159 die Hülsenlage 119 vor sich her, so daß die Ausschiebeposition 117 wieder gefüllt wird.

Die Kolben-Zylinder-Einheit kann nun bis zum nächsten Arbeitstakt in dieser Position verharren oder in die gezeigte Ausgangslage zurückfahren. Die erstere der beiden Möglichkeiten bietet den Vorteil, daß die Arbeitswege so kurz sind wie irgend möglich und keine Leerwege in Kauf genommen werden müssen. Die zweite der beiden Möglichkeiten bietet den Vorteil einer einfacheren Steuerung, da spätestens dann die Nachschubeinrichtung den Weg frei machen muß, wenn eine neue Hülsenlage aufgelegt werden muß.

Der Rechen 103 weist im vorliegenden Fall neun Zinken 104 auf, während die Rasterablage 113 dreizehn Hülsenreihen aufnehmen kann.

Nachdem sich also, ausgehend von einer vollbesetzten Rasterablage 113, der obige Vorgang neunmal wiederholt hat, kann eine neue Hülsenlage 119 dem Leerhülsenspeicher 33 entnommen werden und auf der Rasterablage 113 abgelegt werden.

Hierzu fährt der Rechen 103 mit seinen Zinken 104 in die oberste Lage des Leerhülsenspeichers 33, hebt diese ein wenig an und fährt dann wieder zurück in die in Fig. 1 gezeigte Stellung. Gegebenenfalls kann jetzt eine Drehung in die gestrichelt gezeigt Stellung erfolgen. Danach wird die entnommene Hülsenschicht vertikal nach oben (107) gefahren und zwar soweit, bis der Rechen 103 etwas oberhalb der Rasterablage 113 steht. Er muß soweit oberhalb stehen, daß er bei der jetzt folgenden horizontalen Bewegung 108 auf die Rasterablage 113 zu, die angelieferten Leerhülsen 101 von oben in die vorgesehenen Ablagepositionen 114 ablegen kann.

Dabei ist jedem Zinken 104 des Rechens 103 genau eine der Ablagepositionen 114 zugeordnet, und zwar so, daß jeder Zinken 104 mittig oberhalb seiner zugehörigen Rinne 140 ausgerichtet ist.

Nachdem der Rechen 103 sich soweit abgesenkt hat, daß die mitgebrachten Spulhülsen 101 umfangsmäßig in ihren Rinnen 140 liegen und der Innenumfang jeder Spulhülse 101 keine Berührung mehr mit dem zugehörigen Zinken 104 hat, wird der Rechen 103 in der horizontalen Richtung 108 in die in Fig. 2 gezeigte Position gefahren und kann danach erneut in die Beladestellung zum Leerhülsenspeicher 33 gebracht werden.

Diese Vorgänge wiederholen sich laufend und sind deshalb funktionell leicht in den Arbeitsgang der in der folgenden Fig. 8 beschriebenen Spinnanlage zu integrieren.

Wie Fig. 8 erkennen läßt besteht eine erfindungsgemäße Spinnanlage 1 zur ununterbrochenen Herstellung einer Vielzahl von Chemiefäden aus einer Vielzahl von Spulmaschinen 2, die in Spulmaschinen-Kolonnen 3 längs eines Bedienungsganges 4.1, 4.2 angeodnet sind. Gezeigt sind hier zwei Bedienungsgänge 4.1, 4.2, welche zueinander parallel ausgerichtet sind. Auf jeder Seite je eines der Bedienungsgänge ist jeweils eine Spulmaschinen-Kolonne 3 parallel zu dem Bedienungsgang 4.1, 4.2 angeordnet, wobei die Spulspindeln der einzelnen Spulmaschinen senkrecht in den Bedienungsgang ragen.

In jedem der Bedienungsgänge ist ein Doffer 5 auf einem Doffer-Fahrweg 5.1 fahrbar angeordnet, und zwar so, daß der Doffer 5 entlang des Doffer-Fahrwegs 5.1 von Spulmaschine zu Spulmaschine fahren kann. Im vorliegenden Ausführungsbeispiel ist jeder der Spulmaschinen-Kolonnen ein separater Doffer 5 zugeordnet. Es soll jedoch ausdrücklich darauf hingewiesen werden, daß es auch möglich ist, in jedem Bedienungsgang einen einzigen Doffer auf einem Doffer-Fahrweg fahren zu lassen, der an beiden Spulmaschinen-Kolonnen vorbeiführt.

Der Doffer 5 übernimmt an der jeweils angefahrenen und bedienten Spulmaschine 2.1, 2.2, 2.3, 2.4 Vollspulen 6 von der Spulspindel und übergibt diese an einen Förderwagen 7, der zu diesem Zweck an der jeweils angefahrenen und bedienten Spulmaschine 2.1, 2.2, 2.3, 2.4 in Warteposition ist, um die Vollspulen zu übernehmen. Die Übernahme der Vollspulen auf den Förderwagen erfolgt mittels Tragdorn 7.1. Hierauf wird noch eingegangen werden.

Jedem der Bedienungsgänge 4.1, 4.2 ist eine Förderbahn 10.1, 10.2 zugeordnet. Auf jeder der Förderbahnen ist eine Mehrzahl von einzelbeweglichen Förderwagen 7 fahrbar, wobei jeder einzelne Förderwagen über einen separaten Antrieb verfügt und unabhängig von anderen Förderwagen angehalten werden kann.

Die Förderbahnen verlaufen zwischen den Stirnseiten der Spulmaschinen-Kolonnen und einem Zwischenspeicher 11, und zwar so, daß die Förderwagen auf diesem Weg behinderungfrei hin- und zurückfahrbar sind.

Jede der einzelnen Förderbahnen ist hierzu als geschlossene Förderbahn ausgebildet, und weist eine Hinspur 30 von dem Bedienungsgang 4.1, 4.2 zu dem Zwischenspeicher 11 auf, und eine Rückspur 31 in umgekehrter Richtung, wobei sich jeweils eine geschlossene Bahn in dem Bedienungsgang 4.1, 4.2 und von dort bis vor eine der Stirnseiten 32 des Lagergangs 13 des Zwischenspeichers 11 erstreckt.

Als Hinweg ist in der vorliegenden Anmeldung derjenige Weg bezeichnet, welchen die Förderwagen, beladen mit den zu einer Spulspindel gehörigen Vollspulen, bis zur Übergabe der Vollspulen an den Zwischenspeicher zurücklegen.

Als eine Besonderheit ist es anzusehen, daß die Rückspur 31 jeder Förderbahn 10.1, 10.2 an je einem Leerhülsenspeicher 33.1, 33.2 vorbeiführt, wo die Aufnahme der für eine Spulspindel erforderlichen Leerhülsen 33.11, 33.22 durch die Tragdorne 7.1 der Förderwagen 7 erfolgt.

Eine weitere Besonderheit ist, daß die Rückspur 31 jeder der geschlossenen Förderbahnen 10.1, 10.2 sich als Sackgasse 34 längs des Bedienungsgangs 4.1, 4.2 erstreckt und daß die Hinspur im Bedienungsgang U-förmig ausgeführt ist, wobei ein mit dem Zwischenspeicher 11 verbundener erster Ast 36 auf einer der beiden Seiten der Rückspur 31 liegt und wobei ein zweiter Ast 37 an dem dem Zwischenspeicher 11 zugewandten Ende des Bedienungsgangs 4.1, 4.2 endet und auf der anderen Seite der Rückspur 31 liegt und wobei der erste Ast 36 und der zweite Ast 37 an dem von dem Zwischenspeicher 11 abgewandten Ende durch einen Umkehrbogen 35 verbunden sind, und daß der erste Ast 36 und der zweite Ast 37 mit der Rückspur 31 durch Weichen verbunden sind.

Hierzu ist die Rückspur 31 mit dem ersten Ast 36 der Hinspur 30 über Umsetzweichen 39 verbunden, welche die von der Rückspur 31 kommenden Förderwagen 7 unter Umkehrung der Fahrtrichtung auf den ersten Ast 36 der Hinspur 30 einschleusen.

Weiterhin ist hierzu die Rückspur 31 mit dem zweiten Ast 37 der Hinspur 30 über Parallelweichen 38 verbunden, welche die von der Rückspur 31 kommenden Förderwagen 7 unter Beibehaltung der Fahrtrichtungen auf den zweiten Ast 37 einschleusen.

In Fahrtrichtung der Rückspur 31 gesehen sind insgesamt fünf Weichen hintereinander angeordnet, wobei Umsetzweichen und Parallelweichen wechselnd aufeinander folgen. Weiterhin sind Umsetzweichen und Parallelweichen in enger Nachbarschaft zueinander angeordnet.

Die derartige Weichenanordnung stellt sicher, daß nicht jeder der Förderwagen 7 stets den gesamten U-förmigen Weg umfahren muß, wenn eine der Spulmaschinen bedient werden muß. Weiterhin ist sichergestellt, daß jeder der Förderwagen auf jedem möglichen Weg stets so an einem Doffer ankommt, daß seine auskragenden Tragdorne in der richtigen Aufnahmeposition dem Doffer zugewandt sind.

Die jeweils einem der Bedienungsgänge zugeordneten Förderbahnen sind voneinander unabhängig, indem die Förderbahnen 10.1, 10.2 in unterschiedlichen Förderbahnhöhen I,II an dem Zwischenspeicher vorbeiführen. Die Förderbahnhöhen I,II weisen einen so großen vertikalen Abstand voneinander auf, daß sich die einzelnen Förderwagen der beiden Förderbahnen nicht berühren können.

Die von den Förderwagen aufgenommenen Vollspulen sollen nach Durchlaufen der Einzelkontrolle 8 zur Verpackungsstation 9 gebracht werden.

Da die Vollspulen auf den Spulmaschinen ununterbrochen produziert werden, sind alle Förderwagen im 24 Stunden Betrieb beschäftigt, um die Vollspulen von den Spulmaschinen zu dem ortsfesten Zwischenspeicher 11 zu bringen.

Der Zwischenspeicher 11 besteht aus mehreren Hochgattern 12, die parallel zueinander angeordnet sind und paarweise zwischen sich jeweils einen Lagergang 13 bilden. Jedes der Hochgatter 12 ist mit einer Vielzahl von Lagerdornen 14 ausgestattet, die in Richtung auf den Lagergang 13 auskragen.

In jedem der Lagergänge ist ein Lagergerät 15 zwischen den beiden Endseiten 21 und 32 des Lagergangs hin- und herfahrbar.

Jedes der Lagergeräte weist eine Grundplattform auf, die mit Rädern 16 bestückt ist, und die einen Aufzug 17 trägt, an welchem ein Paar von Tragdornen 18 sitzt. Das Paar von Tragdornen 18 dient zur Übernahme der von einem Förderwagen angelieferten Vollspulen und zur Weitergabe der Vollspulen an die Lagerdorne 14 eines der Hochgatter, sowie zur Übernahme der Vollspulen einer Spulspindel und zur Weitergabe derselben an die Einzelförderer 20. Hierauf wird noch eingegangen werden. Jedenfalls ist es eine besondere Ausführungsform der Erfindung, die Tragdorne jeweils paarweise vorzusehen.

Die Tragdorne 18 sind mittels des Aufzugs höhenverfahrbar, wobei der Aufzug 17 um die Schwenkachse 19 derart schwenkbar ist, daß ein Tragdorn 18 des Lagergeräts 15 entweder mit einem Tragdorn eines Förderwagens oder mit einem Lagerdorn fluchtet.

In einer besonderen Ausführungsform der Erfindung sind die Lagergeräte zweigeteilt. Ein erster Teil ist fahrbar in einem Lagergang 13 , und ein zweiter Teil sitzt stationär jeweils vor einem Lagergang. Der stationäre Teil ist höhenverfahrbar zwischen den Förderbahnhöhen I, II der Förderbahnen 10.1, 10.2 sowie um 180 Grad schwenkbar. Hierdurch werden die angelieferten Vollspulen zunächst auf den stationären Teil übernommen und anschließend auf den fahrbaren Teil zur Zwischenspeicherung weitergegeben.

Die Einzelförderer 20 bringen die zwischengespeicherten Vollspulen während des Schichtbetriebs der Einzelkontrolle 8 und der Verpackungsstation 9 dorthin.

Hierzu sind die Einzelförderer zwischen einer der Endseiten 21 des Lagergangs 13 und der Einzelkontrolle 8 sowie der Verpackungsstation 9 fahrbar.

Im vorliegenden Fall erfolgt dies auf der umlaufenden Transportbahn 22, welche als Besonderheit zwischen der Verpackungsstation 9 und der Endseite 21 der Lagergänge 13 eine Pufferstrecke 23 in Form paralleler Umwegschleifen 24 aufweist.

Diese Transportbahn wird von den Einzelförderern in der Richtung 25 durchfahren, wobei im Bereich der Endseite 21 der Lagergänge 13 jeder Einzelförderer 20 in eine Halteposition bringbar ist, in welcher die Weitergabe der Vollspulen mittels des Lagergeräts erfolgt.

Zur Weitergabe der Vollspulen weist jeder Einzelförderer 20 einen Tragdorn 26 auf, welcher in jeder der Haltepositionen mit seinem freien Ende horizontal in den Lagergang weist. Im mittleren der drei Lagergänge ist der Aufzug derart geschwenkt und auf derartige Höhe gefahren, daß zwei Tragdorne 26 zweier benachbarter Einzelförderer 20 durch die beiden Tragdorne 18 des Aufzugs gleichzeitig bedient werden können. Hierauf wird noch eingegangen werden.

Die umlaufende Transportbahn 22 wird von einer Vielzahl von einzelnen Laufrollen gebildet, die drehbar gelagert sind.

Jeder Einzelförderer 20 besteht aus einer Transportplattform, die mit ihrer Unterseite auf der Rollenbahn entlangläuft.

Dabei liegen die Spulen während des Transports horizontal. Die Verpackung soll aber mit vertikal liegenden Spulen erfolgen. Hierzu müssen die Spulen um 90 Grad gedreht werden. Im Ausführungsbeispiel gemäß Fig. 2 ist hierzu vor der Verpackungsstation 9 eine Transportplattform-Wendeeinrichtung 29 vorgesehen, welche die darüberlaufenden Transportplattformen um 90 Grad wendet. Alsdann laufen die in dieser gewendeten Ansicht kreisförmig gezeichneten Vollspulen in die Verpackungsstation, um dort palettiert zu werden. Hinter der Verpackungsstation wird die Wendung um 90 Grad durch eine entgegengesetzt wirkende Wendeeinrichtung 29 rückgängig gemacht.

Da weiterhin ein nicht näher gezeigter Bereich des Zwischenspeichers zur Zwischenspeicherung von Vollspulen reserviert ist, die in der Einzelkontrolle 8 als Vollspulen minderer Qualität 28 aussortiert wurden, ist zum Zurückfahren der aussortierten Vollspulen minderer Qualität 28 hinter der Einzelkontrolle 8 eine Umgehungsstrecke 27 der Verpackungsstation 9 vorgesehen.

Weiterhin ist in jedem der Bedienungsgänge 4.1, 4.2 ein Aufzug 40 und ein Notbedienungswagen 41 vorgesehen, mit welchem Spulen, die im manuellen Notbetrieb von Hand auf den Notbedienungswagen aufgeladen wurden, auf das Niveau des Förderwagen anhebbar sind.

Die Handhabung der Vollspulen:
Im vorliegenden Fall werden auf jeder der Spulspindeln vier Spulen gleichzeitig produziert.

Jeder Doffer 5 weist zwei parallele Arbeitsarme 42 auf, die voneinander den Abstand der Förderteilung T einnehmen und zur Aufnahme der halben Anzahl der auf einer Spulspindel gleichzeitig produzierten Spulen ausgelegt ist. Im vorliegenden Fall nimmt also jeder der Arbeitsarme 42 zwei Vollspulen 6 auf. Dieser Vorgang ist im einzelnen z.B. in der DE-OS 29 39 675 (= Bag. 1163) beschrieben, auf die diesbezüglich im vollen Umfang Bezug genommen wird.

Verlangt eine Spulmaschine 2 nach einem Wechsel der Spulen, so fährt der zugehörige Doffer 5 die entsprechende Spulmaschine 2.1, 2.2, 2.3, 2.4 an und ruft einen freien Förderwagen 7 herbei.

Jeder Förderwagen 7 weist zwei Tragdorne 7.1 auf, welche voneinander ebenfalls den Abstand T der Förderteilung einnehmen.

Der herbeigerufene Förderwagen 7 positioniert sich in der zugehörigen Dofferposition, so daß die Tragdorne 7.1 des Förderwagens 7 exakt koaxial zu den noch den Spulmaschinen zugewandten Arbeitsarmen 42 des Doffers liegen.

Der Doffer übernimmt auf jeden seiner beiden Arbeitsarme 42 jeweils die Hälfte der Vollspulen einer Spulspindel - hier also zwei Stück - und schwenkt anschließend seine Arbeitsarme um 180°, so daß die mit Vollspulen bestückten Arbeitsarme den Tragdornen 7.1 des wartenden Förderwagens zugeordnet sind und exakt mit diesen fluchten. Der Doffer schiebt nun die jeweils zwei Vollspulen von seinen Arbeitsarmen auf die Tragdorne des Förderwagens, die ebenfalls zur Aufnahme von zwei Vollspulen ausgelegt sind.

Der frisch beladene Förderwagen fährt nun mit seiner Ladung auf der Hinspur 30 seiner Förderbahn 10.1, 10.2 bis vor eine Endseite 21 eines der Lagergänge 13, wobei jedem der Lagergänge 13 einer der Bedienungsgänge 4.1, 4.2 fest zugeordnet ist. Dort weisen die Tragdorne 7.1 des Förderwagens 7 in den Lagergang, wobei der Förderwagen in einer Position anhält, in welcher seine Tragdorne in eine fluchtende Position mit den Tragdornen 18 am Aufzug 17 des Lagergeräts 15 bringbar sind. Der Aufzug 17 des Lagergeräts 15 fährt nun die ebenfalls mit der Förderteilung T beabstandeten Tragdorne 18 auf die Förderhöhe I bzw II, welche der Förderwagen angefahren hat. Anschließend fährt das Lagergerät 15 in dem Lagergang 13 auf den Förderwagen zu, bis die Tragdorne 18 des Lagergeräts 15 mit den Tragdornen 7.1 des Förderwagens 7 fluchten, und übernimmt die jeweils zwei Vollspulen.

Der abgeladene Förderwagen fährt nun auf der Rückspur 31 an dem Leerhülsenspeicher 33.1 bzw 33.2 vorbei, lädt dort die für eine Spulspindel erforderliche Anzahl von Leerhülsen auf und wird dann vorübergehend auf dem als Sackgasse 34 ausgebildeten Teil der Rückspur 31 in Warteposition gebracht, bis ein Doffer Leerhülsen anfordert.

Das beladene Regalbediengerät fährt nun in Richtung zur anderen Endseite 21 des Lagergangs 13, wobei der Aufzug auf eine Höhe gefahren wird, in welcher zwei nebeneinander liegende Tragdorne des Hochgatters unbesetzt sind. Anschließend erfolgt eine Schwenkbewegung um 90°, so daß die Tragdorne des Lageräts 15 fluchtend mit den freien Tragdornen des Hochgatters übereinstimmen. Die Vollspulen werden alsdann an das Hochgatter übergeben und zwischengespeichert.

Diese Funktionen wiederholen sich fortlaufend während eines ganzen 24h Tages.

Sofern nun die Einzelkontrolle und die Verpackungsstation besetzt sind, werden die Einzelförderer 20 an einer Endseite 21 des Lagergangs 13 in Position gebracht. Jeder der Einzelförderer 20 besitzt zwar nur einen einzigen Tragdorn 26. Die Abmessungen der Transportplattformen sind jedoch so gewählt, daß die zwei Tragdorne zweier dicht an dicht liegender Einzelförderer ebenfalls den Abstand der Förderteilung T voneinander einnehmen.

In dieser Position können die Tragdorne 18 der Lagergeräte 15 mit den beiden Tragdornen 26 der beiden Transportplattformen 20 in fluchtende Position gebracht werden.

Hierzu nimmt das Lagergerät von zwei benachbarten Tragdornen einer Etage je eine Vollspule ab, schwenkt um 90° in Richtung zu den Einzelförderern und fährt die Tragdorne 18 auf eine Höhe, die mit der Höhe der Tragdorne 26 der Einzelförderer 20 übereinstimmt.

Danach werden die beiden in Halteposition befindlichen Einzelförderer 20 angefahren und zugleich beladen, so daß diese zur Einzelkontrolle und zur Verpackungsstation abfahren können.

### BEZUGSZEICHENAUFSTELLUNG

- 1: Spinnanlage
- 2: Spulmaschine
- 3: Spulmaschinen-Kolonne
- 4.1: erster Bedienungsgang
- 4.2: zweiter Bedienungsgang
- 5: Doffer
- 5.1: Doffer-Fahrweg
- 6: Vollspule
- 7: Förderwagen
- 7.1: Tragdorn am Förderwagen
- 8: Einzelkontrolle
- 9: Verpackungsstation
- 10.1: erste Förderbahn
- 10.2: zweite Förderbahn
- 11: Zwischenspeicher
- 12: Hochgatter
- 13: Lagergang
- 14: Lagerdorn
- 15: Bediengerät
- 16: Rad
- 17: Aufzug
- 18: Tragdorn am Aufzug
- 19: Schwenkachse des Aufzugs
- 20: Einzelförderer
- 21: Endseite eines Lagergangs
- 22: umlaufende Transportbahn
- 23: Pufferstrecke
- 24: parallele Umwegschleife
- 25: Bewegungsrichtung der beladenen Einzelförderer
- 26: Tragdorn des Einzelförderers
- 27: Umgehungsstrecke
- 28: Vollspule minderer Qualität
- 29: Transportplattform-Wendeeinrichtung
- 30: Hinspur der Förderbahn
- 31: Rückspur der Förderbahn
- 32: eine Stirnseite des Lagergangs
- 33: Leerhülsenspeicher
- 33.1: einzelne Leerhülse
- 34: Sackgasse
- 35: Umkehrbogen
- 36: erster Ast
- 37: zweiter Ast
- 38: Parallelweiche
- 39: Umsetzweiche
- 40: Aufzug
- 41: Notbedienungswagen
- 42: Arbeitsarm
- 43: Transportplattform
- 44: Rollenbahn
- 45: Laufrolle
- 46: Lagerbock
- 47: Fußgestell
- 100: Verladevorrichtung
- 101: Spulhülse, Leerhülse
- 103: Rechen
- 104: Zinken
- 105: Abstand
- 106: Hülsendurchmesser
- 107: vertikale Richtung
- 108: horizontale Richtung
- 109: ortsfester Standpfeiler
- 110: Plattform
- 111: Vertikalantriebsmotor
- 112: Horizontalantriebsmotor
- 113: Rasterablage
- 114: Ablageposition
- 115: Rasterteilung
- 116: Ausschiebeinrichtung
- 117: Ausschiebeposition
- 118: Nachschubeinrichtung
- 119: Hülsenlage
- 120: stirnseitige Angriffsfläche
- 121: Träger
- 122: doppelt wirkende Kolben-Zylinder-Einheit
- 123: Vorschubleitung
- 124: Rückzugleitung
- 125: Rückzugposition
- 126: Vorschubposition
- 127: doppelt wirkende Kolben-Zylinder-Einheit
- 128: Träger
- 129: Vorschubleitung
- 130: Rückzugleitung
- 131: Vorschubposition
- 132: Rückzugposition
- 140: Rinne
- 141: Speicherablage
- 142: Speicherrinne
- 143: eine endseitige Rasterposition
- 144: andere endseitige Rasterposition
- 145: quaderförmiger Speicherraum
- 146: horizontale lichte Weite
- 147: Kartonaufnahmevorrichtung
- 148: Schwenkantrieb
- 149: Karton
- 150: Mittelebene
- 151: Ablageelement
- 152: Nachschubantrieb, Antrieb
- 153: Förderkette
- 154: Kettenrad
- 155: Kettenrad
- 156: Außenradius
- 157: Rinnentiefe
- 158: Hülsenlängsachse
- 159: Schild
- l: Länge der Rasterablage
- L: Länge der Rasterablage zuzüglich Länge der Speicherablage
- T: Förderteilung

## Patentansprüche

1. Vorrichtung zum Verladen von Spulhülsen (101)
aus einem Leerhülsenspeicher (33)
auf den Transportdorn (7.1) von Förderwagen (7),
gekennzeichnet durch
einen Rechen (103) mit auskragenden Zinken (104), deren Abstand (105) im wesentlichen gleich dem Hülsendurchmesser (106) ist und die horizontal in einer Ebene liegen, wobei der Rechen (103) in vertikaler sowie in Richtung der Zinken (104) verfahrbar ist;
eine von dem Rechen (103) beladbare Rasterablage (113) mit Ablagepositionen (114) in einer horizontalen Ebene für jeweils eine Hülse (101), wobei die Teilung (115) der Rasterablage (113) dem Hülsendurchmesser (106) entspricht;
eine Ausschiebeinrichtung (116), welche die Hülsen (101) einer der Ablagepositionen (114) aus der Ausschiebeposition (117) in Längsrichtung auf den Transportdorn (7.1) verschiebt;
eine Nachschubeinrichtung (118), die der Rasterablage (113) zugeordnet ist und durch die nach dem Verschieben der Spulhülse (101) von der Ausschiebeposition (117) auf den Transportdorn (7.1) die auf der Rasterablage (113) abgelegte Hülsenlage (119) um eine Rasterteilung (115) in Richtung auf die Ausschiebeposition (117) versetzbar ist.

2. Vorrichtung nach Anspruch 1,
dadurch gekennzeichnet, daß
die Ausschiebeinrichtung (116) die Spulhülsen (101) der Ausschiebeposition (117) stirnseitig beaufschlagt und parallel zu deren Längsrichtung verschiebt.

3. Vorrichtung nach Anspruch 1 oder 2,
dadurch gekennzeichnet, daß
die Rasterablage (113) aus zueinander parallelen Rinnen (140) besteht, die jeweils für sich eine Ablageposition (114) bilden.

4. Vorrichtung nach einem der Ansprüche 1 bis 3,
dadurch gekennzeichnet, daß
fluchtend vor der Ausschiebeposition (117) der Rasterablage (113) eine Speicherablage (141) angeordnet ist, und daß die Ausschiebeinrichtung (116) stufenweise entweder nur um die Länge der Rasterablage (113) oder zusätzlich um die Länge der Speicherablage (141) verschiebbar ist.

5. Vorrichtung nach Anspruch 4,
dadurch gekennzeichnet, daß
die Länge der Rasterablage (113) im wesentlichen der Länge der Spulhülsen (101) entspricht,
und daß die Länge der Speicherablage (141) im wesentlichen ein ganzzahliges Vielfaches der Länge der Rasterablage (113) ist.

6. Vorrichtung nach Anspruch 4 oder 5,
dadurch gekennzeichnet, daß
die Speicherablage (141) als Speicherrinne (142) ausgebildet ist.

7. Vorrichtung nach einem der Ansprüche 1 bis 6,
dadurch gekennzeichnet, daß
der Rechen (103) derart an einem Verfahrgestell (110) gelagert ist, daß seine Zinken (104) in vertikal aufwärts weisende Richtung drehbar sind.

8. Vorrichtung nach einem der Ansprüche 1 bis 7,
dadurch gekennzeichnet, daß
die Ausschiebeposition (117) eine der endseitigen Rasterpositionen (143) ist,
und daß die Nachschubeinrichtung (118) in Richtung von der anderen der beiden Endseiten (143, 144) der Rasterablage (113) zur Ausschiebeposition (117) beweglich ist.

9. Vorrichtung nach einem der Ansprüche 1 bis 8,
dadurch gekennzeichnet, daß
der Leerhülsenspeicher (33) einen quaderförmigen Speicherraum (145) besitzt, der in einer dem Rechen (103) zugewandten Vertikalebene, in welcher die Stirnflächen der Spulhülsen (101) liegen, offen ist und dessen horizontale lichte Weite im wesentlichen ein ganzzahliges Vielfaches des Hülsendurchmessers (106) ist.

10. Vorrichtung nach Anspruch 9,
dadurch gekennzeichnet, daß
der Leerhülsenspeicher (33) ein Karton (149) ist, der vorzugsweise in eine ortsfeste Kartonaufnahmevorrichtung (147) paßt.

11. Vorrichtung nach einem der Ansprüche 1 bis 10,
gekennzeichnet durch
Bedienungswagen (7) mit mehreren Transportdornen (7.1) vertikal übereinander;
eine der Anzahl der Transportdorne (7.1) entsprechende Anzahl von Rasterablagen (113), die jeweils in der Ebene eines der Transportdorne (7.1) liegen;
eine jeder Rasterablage (113) zugeordnete Ausschiebeinrichtung (116) und eine jeder Rasterablage (113) zugeordnete Nachschubeinrichtung

12. Vorrichtung nach einem der Ansprüche 1 bis 11,
gekennzeichnet durch
Bedienungswagen (7) mit mehreren Transportdornen (7.1) in jeweils einer horizontalen Ebene nebeneinander;
eine Rasterablage (113) mit einer der Anzahl der Transportdorne (7.1) entsprechenden Anzahl von Ausschiebepositionen (117);
eine der Anzahl der Ausschiebepositionen (117) entsprechende Anzahl von Ausschiebeinrichtungen (116).

13. Vorrichtung nach Anspruch 12,
dadurch gekennzeichnet, daß
die Rasterablage (113) vertikal zweigeteilt ist, und daß sich die Ausschiebepositionen (117) bezüglich der Mittelebene (150) gegenüberliegen.

14. Vorrichtung nach einem der Ansprüche 1 bis 13,
dadurch gekennzeichnet, daß
die Rasterablage (113) aus zusammenhängenden Ablageelementen (151) besteht, die quer zur Hülsenlängsachse (158) in Richtung zur Ausschiebeposition (117) beweglich sind,
und daß die Nachschubeinrichtung (118) aus einem Antrieb (127) besteht, der jeweils eines der Ablageelemente (151) in die Ausschiebeposition (117) bringt.

15. Vorrichtung nach Anspruch 14,
dadurch gekennzeichnet, daß
die Ablageelemente (151) eine Förderkette (153) bilden.

16. Vorrichtung nach Anspruch 14 oder 15,
dadurch gekennzeichnet, daß
die Ablageelemente (151) kontinuierlich angetrieben sind.

17. Vorrichtung nach Anspruch 14 oder 15,
dadurch gekennzeichnet, daß
die Ablageelemente (151) schrittweise in der Rasterteilung (115) angetrieben sind.

18. Vorrichtung nach einem der Ansprüche 3 bis 13,
dadurch gekennzeichnet, daß
die Rinnen (140) der Rasterablage (113) ortsfest sind,
und daß die Nachschubeinrichtung (118) schrittweise mit der Rasterteilung (115) senkrecht zur Hülsenlängsachse (158) in Richtung zur Ausschiebeposition (117) verfahrbar ist.

19. Vorrichtung nach einem der Ansprüche 1 bis 18,
dadurch gekennzeichnet, daß
die Ausschiebeeinrichtung (118) jeweils an derjenigen Stirnseite der Spulhülsen (101) angreift, welche von dem Transportdorn (7.1) abgewandt ist.

20. Vorrichtung nach einem der Ansprüche 1 bis 19,
dadurch gekennzeichnet, daß
sie einer Spinnanlage (1) zur kontinuierlichen Herstellung von Chemiefäden zugeordnet ist, welche über eine Vielzahl einzelner Spulmaschinen (2, 2.1 ... 2.4) verfügt, die in Spulmaschinenfronten (3) angeordnet sind und zwischen sich Bedienungsgänge (4.1, 4.2) bilden, in denen parallel zu jeder Spulmaschinenfront (3) ein Doffer (5) zum Bedienen der einzelnen Spulmaschinen (2, 2.1 ... 2.4) fahrbar ist und in dem einzeln bewegliche Förderwagen (7) auf einer geschlossenen Bahn (10.1, 10.2) zwischen dem Bedienungsgang (4.1, 4.2) und einer Abladestation (11) fahrbar sind, wobei der Leerhülsenspeicher (33) auf dem Rückweg der Förderwagen (7) von der Abladestation (11) zum Bedienungsgang (4.1, 4.2) angefahren wird.

## Claims

1. Device for loading bobbin cases (101) from an empty case store (33) onto the conveyor mandrels (7.1) of conveyor trucks (7), characterized by a rake (103) having projecting prongs (104), the distance (105) between which is substantially equal to the case diameter (106) and which lie horizontally in a plane, the rake (103) being movable in the vertical direction and in the direction of the prongs (104); by a deposit grid (113) which can be loaded by the rake 103) and with deposit positions (114) in a horizontal plane for one case (101) in each instance, the spacing (115) of the deposit grid (113) corresponding to the case diameter (106); by a discharge device (116) which pushes the cases (101) in one of the deposit positions (114) out of the discharge position (117) in the longitudinal direction onto the conveyor mandrel (7.1); and by a feed device (118) which is associated with the deposit grid (113) and by means of which, when the bobbin case (101) has been pushed from the discharge position (117) onto the conveyor mandrel (7.1), the layer of cases (119) deposited on the deposit grid (113) can be displaced by a screen spacing (115) in the direction towards the discharge position (117).

2. Device according to Claim 1, characterized in that the discharge device (116) acts on the bobbin cases (101) in the discharge position (117) at the end and pushes them parallel to their longitudinal direction.

3. Device according to Claim 1 or 2, characterized in that the deposit grid (113) consists of parallel grooves (140) which each forms *per se* a deposit position (114).

4. Device according to any one of Claims 1 to 3, characterized in that a deposit reservoir (141) is disposed aligned in front of the discharge position (117) of the deposit grid (113); and in that the discharge device (116) can be displaced in steps either only by the length of the deposit grid (113) or additionally by the length of the deposit reservoir (141).

5. Device according to Claim 4, characterized in that the length of the deposit grid (113) corresponds substantially to the length of the bobbin cases (101); and in that the length of the deposit reservoir (141) is substantially an integral multiple of the length of the deposit grid (113).

6. Device according to Claim 4 or 5, characterized in that the deposit reservoir (141) is in the form of a storage groove (142).

7. Device according to any one of Claims 1 to 6, characterized in that the rake (103) is mounted on a movable frame (110) in such a way that its prongs (104) can be rotated into a direction pointing vertically upwards.

8. Device according to any one of Claims 1 to 7, characterized in that the discharge position (117) is one of the end screen positions (143); and in that the feed device (118) is movable in the direction from the other of the two ends (143, 144) of the deposit grid (113) to the discharge position (117).

9. Device according to any one of Claims 1 to 8, characterized in that the empty case store (33) has a cuboid storage chamber (145) which is open in a vertical plane which faces the rake (103) and in which the end faces of the bobbin cases (101) lie, and the horizontal inside width of the storage chamber is substantially an integral multiple of the case diameter (106).

10. Device according to Claim 9, characterized in that the empty case store (33) is a cardboard box (149) which preferably fits in a stationary cardboard box accommodating device (147).

11. Device according to any one of Claims 1 to 10, characterized by service trucks (7) having a plurality of conveyor mandrels (7.1) vertically above one another; by a number of deposit grids (113) corresponding to the number of conveyor mandrels (7.1), each of which deposit grids lies in the plane of one of the conveyor mandrels (7.1); and by a discharge device (116) associated with each deposit grid (113) and a feed device associated with each deposit grid (113).

12. Device according to any one of Claims 1 to 11, characterized by service trucks (7) with a plurality of conveyor mandrels (7.1) in each case in a horizontal plane adjacent one another; by a deposit grid (113) with a number of discharge positions (117) corresponding to the number of conveyor mandrels (7.1); and by a number of discharge devices (116) corresponding to the number of discharge positions (117).

13. Device according to Claim 12, characterized in that the deposit grid (113) is vertically in two parts; and in that the discharge positions (117) are opposite relative to the central plane (150).

14. Device according to any one of Claims 1 to 13, characterized in that the deposit grid (113) consists of connected depositing elements (151) which are movable transversely to the longitudinal axis of the cases (158) in the direction towards the discharge position (117); and in that the feed device (118) consists of a drive (127) which in each case brings one of the depositing elements (151) into the discharge position (117).

15. Device according to Claim 14, characterized in that the depositing elements (151) form a conveyor chain (153).

16. Device according to Claim 14 or 15, characterized in that the depositing elements (151) are driven continuously.

17. Device according to Claim 14 or 15, characterized in that the depositing elements (151) are driven in steps according to the screen spacing (115).

18. Device according to any one of Claims 3 to 13, characterized in that the grooves (140) of the deposit grid (113) are stationary; and in that the feed device (118) is movable in steps at a screen spacing (115) perpendicular to the longitudinal axis of the cases (158) in the direction towards the discharge position (117).

19. Device according to any one of Claims 1 to 18, characterized in that the discharge device (118) in each case acts on the end face of the bobbin cases (101) which is remote from the conveyor mandrel (7.1).

20. Device according to any one of Claims 1 to 19, characterized in that it is associated with a spinning installation (1) for the continuous production of chemical yarns, which has a plurality of individual winding machines (2, 2.1, ... 2.4) which are disposed in winding machine fronts (3) and form therebetween service passages (4.1, 4.2) in which a doffer (5) is movable parallel to each winding machine front (3) for servicing the individual winding machines (2, 2.1 ... 2.4) and in which individually movable conveyors (7) are movable on a closed track (10.1, 10.2) between the service passage (4.1, 4.2) and an unloading station (11), the empty case store (33) being approached on the return path of the conveyor trucks (7) from the unloading station (11) to the service passage (4.1, 4.2).

## Revendications

1. Dispositif pour le chargement de bobinots (101) provenant d'un magasin (33) à bobinots vides sur les broches de transport (7.1) d'un chariot de transport (7), caractérisé par un râteau (103) avec des dents (104) en porte-à-faux dont l'espacement (105) est sensiblement égal au diamètre des bobinots et qui sont disposées horizontalement dans un plan, le râteau (103) étant mobile dans la direction verticale et dans la direction des dents (104); une surface réceptrice (113) compartimentée qui est chargée par le râteau (103) et comporte, dans un plan horizontal, des emplacements (114) récepteurs pour chaque fois un bobinot (101), le pas de subdivision (115) de la surface réceptrice (113) compartimentée correspondant au diamètre (106) des bobinots: un dispositif de transfert (116) qui transfère les bobinots (101) de l'un des emplacements (114) récepteurs longitudinalement de l'emplacement de transfert (117) sur la broche de transport (7.1); un dispositif d'avance (118) qui est associé à le surface réceptrice (113) compartimentée et au moyen duquel la rangée (119) de bobinots déposés sur la surface réceptrice (113) compartimentée est déplacée d'un pas de subdivision (115) en direction de l'emplacement de transfert (117) chaque fois qu'un bobinot (101) a été transféré de l'emplacement de transfert (117) sur la broche de transport (7.1).

2. Dispositif selon la revendication 1, caractérisé en ce que le dispositif de transfert (116) agit sur la face frontale des bobinots (101) de l'emplacement de transfert (117) et déplace ceux-ci parallèlement à leur longueur.

3. Dispositif selon la revendication 1 ou la revendication 2, caractérisé en ce que la surface réceptrice (113) compartimentée se compose de gouttières (140) mutuellement parallèles qui forment chacune en soi un emplacement récepteur (114).

4. Dispositif selon l'une des revendications 1 à 3, caractérisé en ce qu'une surface de stockage (141) est disposée devant l'emplacement de transfert (117) de le surface réceptrice (113) compartimentée, dans l'alignement de celui-ci, et par le fait que le dispositif de transfert (116) peut être déplacé pas à pas soit seulement de la longueur de la surface réceptrice (113) compartimentée, soit en supplément de la longueur de la surface de stockage (141).

5. Dispositif selon la revendication 4, caractérisé en ce que la longueur de la surface réceptrice (113) compartimentée correspond sensiblement à la longueur des bobinots (101) et que la longueur de la surface de stockage (141) correspond sensiblement à un multiple entier de la longueur del a surface réceptrice (113) compartimentée.

6. Dispositif selon la revendication 4 ou la revendication 5, caractérisé en ce que la surface de stockage (141) est agencée sous la forme d'une gouttière de stockage (142).

7. Dispositif selon l'une des revendications 1 à 6, caractérisé eu ce que le râteau (103) est monté sur un châssis mobile (110) de manière telle que ses dents (104) puissent être amenées par pivotement dans la position verticale tournée vers le haut.

8. Dispositif selon lune des revendications 1 à 7, caractérisé en ce que l'emplacement de transfert (117) est l'un des emplacements récepteurs (143) d'extrémité et que le dispositif d'avance (118) se déplace à partir de l'autre des deux extrémités (143, 144) de la surface réceptrice (113) compartimentée dans la direction dudit emplacement de transfert (117).

9. Dispositif selon l'une des revendications 1 à 8, caractérisé en ce que le magasin (33) à bobinots vides comporte une chambre (145) de magasin parallélépipédique qui est ouverte dans un plan vertical tourné vers le râteau et contenant las faces frontales des bobinots (101) et dont l'ouverture libre horizontale correspond sensiblement à un multiple entier du diamètre (106) des bobinots.

10. Dispositif selon la revendication 9, caractérisé en ce que le magasin (33) à bobinots vides est un carton qui de préférence s'adapte dans un dispositif récepteur (147) fixe.

11. Dispositif selon l'une des revendications 1 à 10, caractérisé par des chariots de desserte (7) avec plusieurs broches de transport (7.1) disposées verticalement les unes au-dessus des autres: des surfaces réceptrices (113) compartimentées en nombre égal au nombre de broches du transport (7.1), lesquelles surfaces réceptrices sont situées chaque fois dans le plan de l'une des broches de transport (7.1); un dispositif de transfert (116) associé à chacune des surfaces réceptrices (113) compartimentées et un dispositif d'avance associé à chacune desdites surfaces réceptrices (113) compartimentées.

12. Dispositif selon l'une des revendications 1 à 11, caractérisé par des chariots de transport (7) avec plusieurs broches de transport (7.1) disposées respectivement les unes à côté des autres dans un plan horizontal; une surface réceptrice (113) compartimentée avec des emplacements de transfert (117) en nombre égal au nombre de broches de transport (7.1); des dispositifs de transfert (116) en nombre égal au nombre d'emplacements de transfert (117).

13. Dispositif selon la revendication 12, caractérisé en ce que la surface réceptrice (113) est divisée en deux dans le sens vertical et en ce que les emplacements de transfert (117) sont situés en vis-à-vis par rapport au plan médian (150).

14. Dispositif selon l'une des revendications 1 à 13, caractérisé en ce que la surface réceptrice (113) compartimentée se compose d'éléments récepteurs (151) liés entre eux qui sont mobiles transversalement à l'axe longitudinal (158) des bobinots en direction de l'emplacement de transfert (117) et en ce que le dispositif d'avance (118) se compose d'un mécanisme d'entraînement (127) qui amène chaque fois l'un des éléments récepteurs (151) dans la position de transfert (117).

15. Dispositif selon la revendication 14, caractérisé en ce que les éléments récepteurs (151) forment une chaîne transporteuse (153).

16. Dispositif selon la revendication 14 ou la revendication 15, caractérisé en ce que les éléments récepteurs (151) sont entraînés de manière continue.

17. Dispositif selon la revendication 14 ou la revendication 15, caractérisé eu ce que les éléments récepteurs (151) sont entraînés pas à pas an accord avec le pas de subdivision (115).

18. Dispositif selon l'une des revendications 3 à 13, caractérisé en ce que les gouttières (140) de la surface réceptrice (113) compartimentée sont fixes et en ce que le dispositif d'avance (118) peut être déplacé pas à pas en accord avec le pas de subdivision (115) perpendiculairement à l'axe longitudinal (158) du bobinot en direction de l'emplacement de transfert (117).

19. Dispositif selon l'une des revendications 1 à 18, caractérisé en ce que la dispositif do transfert (116) agit chaque fois sur la face frontale des bobinots (101) éloignée de la broche de transport (7.1).

20. Dispositif selon l'une des revendications 1 à 19, caractérisé en ce qu'il est associé à une installation de filage (1) pour la fabrication en continu de fibres chimiques qui dispose d'une pluralité de bobineuses (2, 2.1...2.4) indépendantes qui forment des fronts de machines (3) avec entre ceux-ci des couloirs de desserte (4.1, 4.2) dans lesquels un doffer (5) se déplace parallèlement à chaque front de machines (3) aux fins de desservir les différentes bobineuses (2, 2.1...2.4) et dans lequel des chariots (7) de transport mobiles individuellement se déplacent sur une trajectoire (10.1, 10.2) fermée entre le couloir de desserte (4.1, 4.2) et un poste de déchargement (11), le chariot de transport (7) passant par le magasin (33) à bobinots vides sur son trajet de retour menant du poste de déchargement (11) au couloir de desserte (4.1, 4.2).
